# EUROPÄISCHE PATENTSCHRIFT

(11) **EP 1 649 257 B1**
(45) Veröffentlichungstag und Bekanntmachung des Hinweises auf die Patenterteilung: **05.11.2008**
(21) Anmeldenummer: 04763299.7
(22) Anmeldetag: 16.07.2004
(51) Int. Cl.: G01L 9/00

(54) **DRUCKSENSOR**
PRESSURE SENSOR
CAPTEUR DE PRESSION

(30) Priorität: 29.07.2003 DE 10334854
(43) Veröffentlichungstag der Anmeldung: 26.04.2006
(73) Patentinhaber: Endress + Hauser GmbH + Co. KG, 79689 Maulburg (DE)
(72) Erfinder: DREWES, Ulfert, 79379 Müllheim (DE); FLÖGEL, Karl, 79650 Schopfheim (DE); HEGNER, Frank, 79540 Lörrach (DE); MARTIN, Rainer, 79588 Efringen-Kirchen (DE); UEHLIN, Thomas, 79650 Schopfheim (DE)
(74) Vertreter: Andres, Angelika Maria
(86) Internationale Anmeldenummer: PCT/EP2004/007975
(87) Internationale Veröffentlichungsnummer: WO 2005/012865

(56) Entgegenhaltungen:
- EP-A- 0 759 547
- DE-A- 4 407 212
- DE-A- 10 106 129
- US-A- 4 501 051
- US-B1- 6 363 790

## Beschreibung

Die vorliegende Erfindung betrifft einen Drucksensor zum Erfassen eines Mediendrucks bzw. eines Mediendrucks. Insbesondere bei Drucksensoren die zur Druckmessung in aggressiven Chemikalien eingesetzt werden, erweist sich die Abdichtung zwischen der Druckmeßzelle und der Medienöffnung des Sensorgehäuse als problematisch, da die üblichen elastischen O-Ringe nicht bzw. nur mit Einschränkung verwendet werden können. Stattdessen kommen PTFE-Dichtungen zum Einsatz, wobei PTFE zwar die gewünschte chemische Stabilität aufweist, aber mechanisch Probleme mit sich bringt, da PTFE keine ausreichende Elastizität aufweist und unter Druck sogar fließt. Kathan et al. offenbaren in der Offenlegungsschrift DE 19628551 A1 ein Druckmeßgerät, bei dem eine ringförmige Flachdichtung aus PTFE zwischen der medienseitigen Stirnfläche der Druckmeßzelle und einer axialen Anschlagfläche des Sensorgehäuses axial eingespannt ist, wobei die axiale Anschlagfläche federelastische Eigenschaften aufweist. Dieser Lösungsansatz führt jedoch zu Temperaturhysteresefehlem, da der Wärmeausdehnungskoeffizient des Stahlgehäuses stark von dem der keramischen Meßzelle abweicht und sich unmittelbar auf die Meßmembran der Meßzelle auswirkt. Flögel et al. schaffen mit der Lehre der Offenlegungsschrift DE 101 06 129 A1 in gewissem Maße Abhilfe, denn der dort vorgeschlagene Sensor weist im Bereich der Medienöffnung des Gehäuses einen vergleichsweise massiven Kovarring auf, der die axiale Anschlagfläche trägt, wodurch eine Annäherung des effektiven Wärmeausdehnungskoeffizienten der axialen Anschlagfläche bewirkt werden soll. Wenngleich dies die gewünschte Annäherung der Wärmeausdehnungs-koeffizienten erreicht wird, sind nun Temperaturspannungen zwischen den Stahlteilen des Gehäuses und dem Kovarring zu erwarten, welche noch auf die Meßzelle rückwirken können.

US-B1-6363790 offenbart einen Druckaufnehmer der Temperatur-Hysterese-Effekte, die in Folge von wärmebedingten Ausdehnungen durch Spannungen zwischen einer keramischen Druckmesszelle und einem metallischen Gehäuse verursacht werden, vermeidet. Dieser Druckaufnehmer zur Bestimmung des Drucks eines Prozessmediums umfasst ein zu einem Prozessmedium offenes metallisches Gehäuse, das eine durchgehende Bohrung zur Aufnahme einer keramischen Druckmesszelle aufweist, wobei die Druckmesszelle einen keramischen Grundkörper und eine darauf angebrachte keramische, dem Prozessmedium ausgesetzte Messmembran sowie geeignete Mittel umfasst, die ein den auf die Membran wirkenden Prozessdruck entsprechendes abgreifbares elektrisches Signal liefern. Die Druckmesszelle ist im Gehäuse mittels einer metallischen Befestigungsvorrichtung axial federnd befestigt, die auf eine zwischen der Druckmesszelle und der Befestigungsvorrichtung vorgesehenen nichtmetallischen Zwischenkörper wirkt, der wenigstens gegenüber der Befestigungsvorrichtung radial beweglich ist, wobei die axiale Federung über einen Ohrring ermöglicht wird, der zwischen der Membran und dem Gehäuse eingespannt ist.

Die deutsche Offenlegungsschrift DE 44 07 212 A offenbart einen Drucksensor mit einem in einem Gehäuse angebrachten Sensorelement. Zwischen dem Gehäuse und dem Sensorelement ist ein sich verjüngender Ringraum vorhanden, der stirnseitig in einen Ringspalt übergeht. Im Ringraum ist ein Dichtungselement axial unter Vorspannung gedrückt gehalten, so dass es in Folge von Deformationen das Sensorelement im Gehäuse fixiert hält. Das Dichtungselement besteht aus einem kalt fließenden Material und ist unter hohem Einpressdruck in den Ringraum eingesetzt, so dass der Ringspalt dicht versiegelt ist. Federelemente stellen sicher, dass im Falle temperaturbedingter Volumenänderung des Dichtungselements unter allen Betriebsbedingungen eine ausreichende Vorspannkraft erhalten bleibt. Der Drucksensor ist durch Hochtemperaturprozesse sterilisierbar und ist für den Einsatz in der Lebensmittel- und Pharmaindustrie vorgesehen.

Der Erfindung liegt daher die Aufgabe zugrunde, einen Drucksensor bereitzustellen, der die genannten Nachteile des Stands det Technik überwindet. Diese Aufgabe wird erfindungsgemäß gelöst durch den Drucksensor gemäß des unabhängigen Anspruchs 1.

Der erfindungsgemäße Drucksensor umfaßt eine Druckmeßzelle mit einer mit dem Medium beaufschlagbaren Stirnfläche; ein Gehäuse mit einer Medienöffnung und eine ringförmige axiale Anschlagfläche, welche die Medienöffnung umschließt; eine Einspannvorrichtung; und eine ringförmige Dichtungsanordnung, wobei die Druckmeßzelle in dem Gehäuse und die Dichtungsanordnung zwischen der Anschlagfläche und der Stirnfläche positioniert ist, und die Dichtungsanordnung sowie die Druckmeßzelle zwischen der Anschlagfläche und der Einspannvorrichtung axial eingespannt sind, dadurch gekennzeichnet, daß die Dichtungsanordnung einen Entkopplungsring sowie ein erstes und ein zweites ringförmiges Dichtelement umfasst, das erste Dichtelement an der Stirnfläche anliegt, das zweite Dichtelement an der Anschlagfläche anliegt, und der Entkopplungsring zwischen dem ersten und dem zweiten Dichtelement axial eingespannt ist.

Der Begriff "ringförmig" bezieht sich im vorliegenden Zusammenhang nicht nur auf Kreisringe, sondern auf jegliche in sich geschlossenen Pfade um eine Öffnung. Diese können u.a. auch einen ovalen, rechteckigen, hexagonalen, oder einen beliebigen anderen polygonalen Verlauf aufweisen.

Die Druckmeßzelle kann einen Grundkörper und eine Meßmembran aus einem ersten Material aufweisen, welches beispielsweise eine Keramik, insbesondere Korund, oder ein kristallines Material sein kann. Der Entkopplungsring sollte vorzugsweise aus einem Material gefertigt sein, dessen mechanische und/oder thermische Eigenschaften denen des ersten Materials weitgehend annähert bzw. gleicht. Dies kann beispielsweise dadurch erzielt werden, daß der Entkopplungsring ebenfalls aus dem erste Material gefertigt ist.

Der Entkopplungsring ist vorzugsweise so gestaltet, daß radiale Kräfte, die zwischen dem Entkopplungsring und der axialen Anschlagfläche aufgrund von Wärmeausdehnungsunterschieden auftreten können, allenfalls zu vernachlässigbaren Verformungen des Entkopplungsrings führen. Dies kann beispielsweise durch eine gewisse Steifigkeit erzielt werden und andererseits, durch die Verwendung eines Entkopplungsrings mit zwei planparallelen Stirnflächen. Auf diese Weise können Wärmeausdehnungsunterschiede zwischen der axialen Anschlagfläche und dem Entkopplungsring im wesentlichen ausschließlich zu Scherkräften führen, die weitestgehend durch Verformungen des zweiten Dichtungselementes abgebaut werden.

Dessen ungeachtet können die Stirnflächen Vorsprünge und/oder Aussparungen, aufweisen, die beispielsweise ringförmig gestaltet sind, um das Fließen der Dichtungselemente unter Last zu begrenzen. Dies ist insbesondere dann zu erwägen, wenn das erste und/oder das zweite Dichtelement ein Material wie PTFE, insbesondere in Form einer Flachdichtung aufweisen. In einigen Fällen kann es auch geboten sein, O-Ringe als die Dichtungselemente einzusetzen. In diesem Fall sollte zumindest jeweils eine der Stirnflächen, zwischen denen die O-Ringe eingespannt sind, die erforderliche Gestalt eines O-Ring-Betts aufweisen.

In einer derzeit bevorzugten Ausgestaltung eines erfindungsgemäßen Drucksensor weist die Einspannvorrichtung und/oder das Gehäuse ein axial elastisches Element auf. Dieses axial elastische Element kann u.a. eine Tellerfeder sein, die beispielsweise die axiale Anschlagfläche bildet bzw. in diese intergiert ist, eine Wellrohrmembran, welche in die Medienöffnung integriert ist, sowie eine Feder, z.B. eine Schraubenfeder oder eine Tellerfeder, die zwischen der Rückseite der Druckmeßzelle und einem Einspannring axial eingespannt ist.

Das elastische Element gewährleistet ein solches Maß an Elastizität, daß die Dichtungselemente bei Druckschwankungen und Druckstößen des Mediums sowie bei Temperaturschwankungen des Drucksensors nur solchen Schwankungen des axialen Einspanndrucks ausgesetzt sind, daß die Dichtungswirkung nicht beeinträchtigt ist. Zudem dient das elastische Element dazu, das Setzen bzw. die plastische Verformung der Dichtungselemente unter Last zu kompensieren. Die Elastizität ist vorzugsweise solchermaßen ausgelegt, daß der axiale Einspanndruck auf das erste und das zweite Dichtungselement über Temperaturzyklen zwischen - 40°C und 150°C um nicht mehr als 50% weiter vorzugsweise um nicht mehr als 25% und besonders bevorzugt um nicht mehr als 12% des maximal auftretenden Einspanndrucks schwankt.

Weiterhin ist es derzeit bevorzugt, daß der axiale Einspanndruck auf das erste und das zweite Dichtungselement über Temperaturzyklen zwischen -40°C und 150°C nicht unter 0,8 MPa vorzugsweise um nicht unter 0,9 MPa und besonders bevorzugt nicht unter 1 MPa sinkt. Die Erfindung wird nun anhand der beigefügten Zeichnungen beschrieben. Es zeigt:
- Fig. 1:: einen Längsschnitt durch ein erstes Ausführungsbeispiel eines erfindungsgemäßen Drucksensors;
- Fig.2:: einen Längsschnitt durch ein zweites Ausführungsbeispiel eines erfindungsgemäßen Drucksensors;
- Fig. 3:: einen Längsschnitt durch ein drittes Ausführungsbeispiel eines erfindungsgemäßen Drucksensors;
- Fig.4:: einen Längsschnitt durch ein viertes Ausführungsbeispiel eines erfindungsgemäßen Drucksensors; und
- Fig. 5:: einen Längsschnitt durch ein fünftes Ausführungsbeispiel eines erfindungsgemäßen Drucksensors.

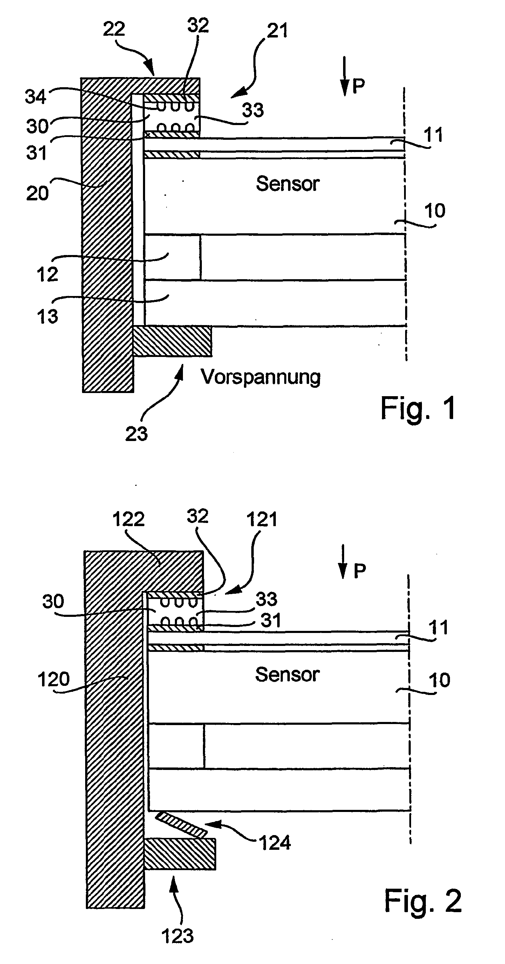

Der in Fign 1-4 gezeigte Drucksensor umfaßt eine zylindrische keramische Druckmeßzelle, beispielsweise aus Korund, die nach dem kapazitiven Meßprinzip arbeitet. Selbstverständlich können auch beliebige andere Druckmeßzellen zum Einsatz kommen, beispielsweise mit druckabhängigen Resonatoren oder Widerständen. Die Druckmeßzellen sind in den dargestellten Ausführungsbeispielen jeweils mit unterschiedlichen Varianten in einem Gehäuse axial eingespannt.

Der in Fig. 1 gezeigte erfindungsgemäße Drucksensor umfaßt eine Druckmeßzelle mit einem Grundkörper 10 und einer Meßmembran 11. Die Druckmeßzelle ist in einem Gehäuse 20 angeordnet, wobei das Gehäuse 20 eine Medienöffnung 21 aufweist, durch welche die Meßmembran 11 der Druckmeßzelle mit dem Mediendruck beaufschlagbar ist. Das Gehäuse 22 weist einen metallischen Werkstoff auf, der vorzugsweise korrosionsbeständig ist, beispielsweise Edelstahl. Das Gehäuse 20 umfaßt eine ringförmige, sich radial einwärts erstreckende Schulter, welche die Medienöffnung umgibt, und welche eine axiale Anschlägfläche 22 definiert. Die ringförmige Schulter weist Eigenschaften einer Tellerfeder auf, so daß die axiale Anschlagfläche 22 axial elastisch ist. Zwischen dem Gehäuse ist ein Schraubring 23 angeordnet, der auf seiner äußeren Mantelfläche ein Gewinde aufweist, welches in ein Innengewinde an der Wand des Gehäuse 20 eingrifft. Die Druckmeßzelle ist rückseitig mit dem Schraubring 23 eingespannt, wobei die Druckmeßzelle mit der Meßmembran 11 gegen eine ringförmige Dichtungsanordnung 30 drückt, so daß die Dichtungsanordnung 30 zwischen der Meßmembran 11 und der axialen Anschlagfläche 22 derart axial eingespannt ist, daß der Innenraum des Gehäuses gegen die Medienöffnung 21 abgedichtet ist. Aufgrund der Elastizität der axialen Anschlagfläche 22 können bei Temperaturschwankungen die unterschiedlichen Längenänderungen von Druckmeßzelle und Gehäuse ohne unvertretbare Schwankungen der axialen Einspannkräfte ausgeglichen werden. Vorzugsweise ermöglicht die axiale Elastizität auch den Ausgleich von ggf. auftretende Unebenheiten der Funktionsflächen, d.h. der Flächen zwischen denen die Dichtungselemente eingespannt sind.

Die Dichtungsanordnung 30 umfaßt im wesentlichen einen Entkopplungsring 33, der einen keramischen Werkstoff, insbesondere Korund, aufweist. Der Entkopplungsring 30 umfaßt vorzugsweise zwei planparallele Stirnflächen 31, 32, mittels derer ein erstes ringförmiges Dichtelement 31 und ein zweites ringförmiges Dichtelement 32 gegen die Druckmeßzelle bzw. gegen die axiale Anschlagfläche 22 gedrückt werden. Die Stirnflächen können Strukturelemente aufweisen, um die radiale Bewegung der Dichtelemente 31, 32, insbesondere das Kaltfließen von PTFE-Dichtelementen unter Druck, zu begrenzen. Als Dichtelemente werden derzeit Flachdichtungen, insbesondere Flachdichtungen aus PTFE bevorzugt. Vozugsweise beträgt die radiale Erstreckung der Flachdichtung, also der Abstand zwischen dem Innenradius und dem Außenradius, mehr als das zehnfache der Materialstärke der Flachdichtung in axialer Richtung.

Die Einspannkraft ist für PTFE-Flachdichtungen besipielsweise so bemessen daß über den gesamten Temperatumennbereich des Drucksensors der axiale Einspanndruck 0,8 MPa, bevorzugt 0,9 MPa und besonders bevorzugt 1 MPa nicht unterschreitet.

Die Druckmeßzelle in Fig. 1 weist zusätzlich eine rückseitige Versteifungsplatte 13 und einen rückseitigen Versteifungsring 12 auf, der zwischen dem Grundkörper 10 und der Versteifungsplatte angeordnet ist. Die axialen Einspannkräfte werden von dem Schraubring 23 über die rückseitige Versteifungsplatte 13 und den rückseitigen Versteifungsring 12 auf den Grundkörper 10 der Druckmeßzelle übertragen. Wenngleich mit dieser Konstruktion radiale Verformungen im Membranbereich aufgrund von axialen Einspannkräfte und Hysteresefehler aufgrund der Abstützung mit dem Schraubring vermindert werden können, so sind die Versteifungsplatte und der Versteifungsring nicht zwingend erforderlich zur Umsetzung der vorliegenden Erfindung. Einzelheiten zur Versteifungsplatte sind in der unveröffentlichten Patenanmeldung DE 10243079 der gleichen Anmelderin offenbart.

Beim in Fig. 2 gezeigten Ausführungsbeispiel, welches im wesentlichen den zuvor erläuterten Konstruktionsprinzipien folgt, sind die folgenden Abweichungen zum Drucksensor aus Fig. 1 zu erwähnen.

Der Drucksensor weist ein Gehäuse 120 mit einer axial steifen, sich radial einwärts erstreckenden Schulter auf, welche eine Medienöffnung 121 begrenzt. An der Schulter ist eine axiale Anschlagfläche 122 ausgebildet, gegen die eine Druckmeßzelle mit einem Grundkörper 10 und einer Meßmembran 11 mittels eines Einschraubrings 123 axial eingespannt ist. Eine Dichtungsanordnung 30 ist wie zuvor beschrieben zwischen der Druckmeßzelle und der axialen Anschlagfläche 122 eingespannt.

Die axiale Elastizität zur Gewährleistung einer hinreichend konstanten Einspannkraft ist in diesem Fall durch ein elastisches Element, beispielsweise einen Federring 124 oder eine Tellerfeder, gewährleistet, wobei das elastische Element zwischen der Rückseite der Druckmeßzelle und dem Schraubring 123 eingespannt ist. Bei der Dimensionierung des elatischen Elementes ist darauf zu achten, daß das elastische Element Überlastdruckstöße zu halten hat, ohne daß die Dichtungen übermäßig entlastet werden.

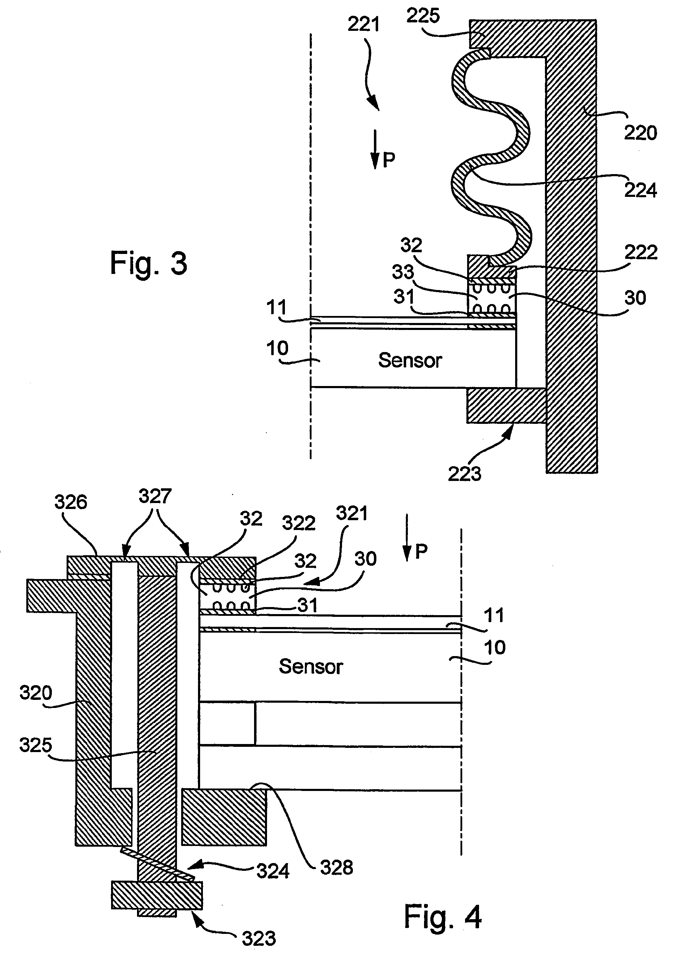

Das Ausführungsbeispiel aus Fig. 3 umfaßt ein Gehäuse 220, mit einer Medienöffnung 221, welche durch eine Wellrohrmembran 224 begrenzt ist. Die Wellrohrmembran 224 ist mit ihrem ersten Ende an dem Gehäuse 220 druckdicht befestigt und sie trägt an ihrem zweiten Ende einen Ringkörper, welcher eine axiale Anschlagfläche 222 aufweist. Eine Druckmeßzelle ist zwischen einem Einschraubring 223 und der axialen Anschlagfläche 222 axial eingespannt, wobei wie zuvor bechrieben zwischen der Meßmembran 11 der Druckmeßzelle und der axialen Anschlagfläche 222 eine Dichtungsanordnung 30 angeordnet ist. Die Wellrohrmembran 224 ist so zu dimensionieren, daß sie den erforderlichen axialen Anpreßdruck für alle Betriebstemperaturen und Mediendruckwerte gewährleistet. Zudem kann die Wellrohrmembran so ausgestaltet werden, daß der axiale Einspanndruck bei sich ändernden Betriebsdrücken annähernd konstant bleibt.

Fig. 4 zeigt schließlich eine Variante, bei der ein Gehäuse 320 eine Medienöffnung 321 aufweist, die durch einen frontseitigen Einspannring 326 mit einer frontseitigen axialen Anschlagfläche 322 begrenzt ist. Der frontseitige Einspannring 326 weist mehrere Zugbolzen auf, die über die Ringfläche in gleichmäßigen Abständen angeordnet sind und durch entsprechende Öffnungen des Gehäuses 320 zur Rückseite des Gehäuses verlaufen. Dort sind die Zugbolzen 325 mit Muttern 323 gesichert, um die Druckmeßzelle zwischen einer rückseitigen axialen Anschlagfläche 328 im Gehäuse 320 der frontseitigen axialen Anschlagfläche 322 einzuspannen.
Zur Gewährleistung hinreichender Elastizität kann einerseits ein axial elastischer Federring 324 an der Rückseite des Gehäuses vorgesehen sein. Andererseits, kann, der frontseitige Einspannring 326 ringförmige Aussparungen 327 aufweisen, um über eine kontrollierte Materialschwächung eine axiale Elastizität zu erzielen. Selbstverständlich sind die beiden Alternativen einzeln oder wie gezeigt in Kombination verwendbar.

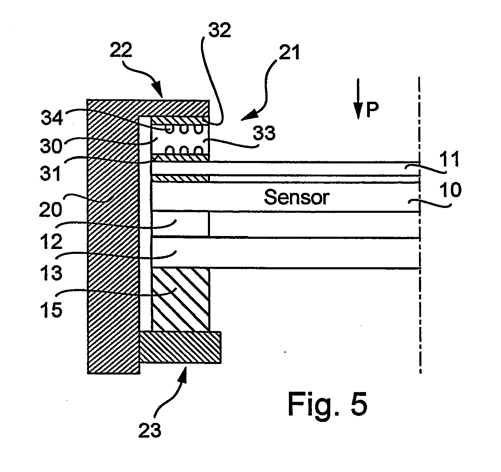

Das in Fig. 5 gezeigte Ausführungsbeispiel unterscheidet sich folgendermaßen vom Ausführungsbeispiel aus Fig. 1. Zwischen der Versteifungsplatte 13 auf der Rückseite der Druckmeßzelle und dem Schraubring 15 ist noch ein Kompensationsring 15 axial eingespannt. Der Kompensationsring ist aus einem Material gefertigt, daß einen größeren Wärmeausdehnungsunterschied aufweist als das Edelstahlgehäuse 20. Auf diese Weise können Unterschiede zwischen der Längenausdehnung der keramischen Druckmeßzelle und dem Gehäuse bei Temperaturschwannkungen ganz oder teilweise Ausgeglichen werden. Geeignete Materialien für den Kompensationsring sind beispielsweise Al, Mg, Zn, und andere Materialien, deren Wärmeausdehnungskoeffizient deutlich größer ist als der von dem Material des Gehäuses 10. Diese Ausgestaltung kann ggf. die Anforderungen an die axiale Elastizität der Anschlagflächen abmildern.

## Patentansprüche

1. Drucksensor zum Erfassen eines Mediendrucks, umfassend:
eine Druckmeßzelle mit einer mit dem Medium beaufschlagbaren Stirnfläche;
ein Gehäuse (20) mit einer Medienöffnung (21) und eine ringförmige axiale Anschlagfläche (22), welche die Medienöffnung (21) umschließt;
eine Einspannvorrichtung (23); und
eine ringförmige Dichtungsanordnung (30), wobei
die Druckmeßzelle in dem Gehäuse (20) und die Dichtungsanordnung (30) zwischen der Anschlagfläche (22) und der Stirnfläche positioniert ist, und die Dichtungsanordnung (30) sowie die Druckmeßzelle zwischen der Anschlagfläche (22) und der Einspannvorrichtung (23) axial eingespannt sind, **dadurch gekennzeichnet, daß**
die Dichtungsanordnung (30) einen Entkopplungsring sowie ein erstes und ein zweites ringförmiges Dichtelement (31) umfasst, das erste Dichtelement (31) an der Stirnfläche anliegt, das zweite Dichtelement (31) an der Anschlagfläche (22) anliegt, und der Entkopplungsring zwischen dem ersten und dem zweiten Dichtelement (31) axial eingespannt ist.

2. Drucksensor nach Anspruch 1, wobei die Druckmeßzelle einen Grundkörper (10) und eine Meßmembran (11) aus einem ersten Material aufweist und der Entkopplungsring ein zweites Material aufweist, wobei die mechanischen und/oder thermischen Eigenschaften des ersten Materials denen des zweiten Materials gleichen.

3. Drucksensor nach Anspruch 2, wobei das erste Material und das zweite Material gleich sind.

4. Drucksensor nach einem der Ansprüche 2 oder 3, wobei das erste Material eine Keramik, insbesondere Korund, oder ein kristallines Material umfaßt.

5. Drucksensor nach einem der vorhergehenden Ansprüche, wobei das erste und/oder das zweite Dichtelement (31, 32) ein inertes Material, insbesondere PTFE umfassen.

6. Drucksensor nach einem der vorhergehenden Ansprüche, wobei der Entkopplungsring (33) in axialer Richtung durch zwei planparallele Stirnflächen begrenzt ist.

7. Drucksensor nach Anspruch 6, wobei die Stirnflächen ringförmige Vorsprünge und/oder Aussparungen (34) aufweisen.

8. Drucksensor nach einem der vorhergehenden Ansprüche, wobei die Einspannvorrichtung (123, 323) und/oder das Gehäuse (220) ein axial elastisches Element (124, 224, 324) umfasst.

9. Drucksensor nach Anspruch 8, wobei der axiale Einspanndruck auf das erste und das zweite Dichtungselement (31, 32) über Temperaturzyklen zwischen -40°C und 150°C um nicht mehr als 40% vorzugsweise um nicht mehr als 20% und besonders bevorzugt um nicht mehr als 10% des maximal auftretenden Einspanndrucks schwankt.

10. Drucksensor nach Anspruch 8 oder 9, wobei der axiale Einspanndruck auf das erste und das zweite Dichtungselement (31, 32) über Temperaturzyklen zwischen -40°C und 150°C nicht unter 0,8 MPa vorzugsweise um nicht unter 0,9 MPa und besonders bevorzugt nicht unter 1 MPa sinkt.

11. Drucksensor nach einem der Ansprüche 8 bis 10; wobei das elastische Element (123, 323) eine Tellerfeder umfasst.

12. Drucksensor nach einem der Ansprüche 8 bis 10, wobei das elastische Element als axial flexible Wellrohrmembran (224) ausgebildet ist, welche die Medienöffnung (221) umschließt, wobei die Wellrohrmembran an einem ersten axialen Ende die axiale Anschlagfläche (222) aufweist und an einem Prozeßanschluß und an einem zweiten Ende druckdicht mit dem Gehäuse (20) verbunden ist.

13. Drucksensor nach einem der vorhergehenden Ansprüche, weiterhin umfassend einen Kompensationsring (15), der zusammen mit der Druckmeßzelle (10) axial eingespannt ist, wobei der Kompensationsring (15) einen größeren Wärmeausdehnungskoeffizienten aufweist als das Material des Gehäuse (20)s, und die Druckmeßzelle (10) einen kleineren Wärmeausdehnungskoeffizienten aufweist als das Material des Gehäuse (20)s.

14. Drucksensor nach Anspruch 13, wobei der Kompensationsring (15), Zink, Magnesium oder Aluminium aufweist.

## Claims

1. Pressure sensor for measuring the pressure of a medium, comprising:
a pressure measuring cell with an end face which can be exposed to the medium;
a housing (20) with a medium opening (21) and an annular, axial stop face (22) which surrounds the medium opening (21);
a clamping jig (23);
an annular seal arrangement (30), whereby
the pressure measuring cell is positioned in the housing (20) and the seal arrangement (30) is located between the stop face (22) and the end face, and the seal arrangement (30) and the pressure measuring cell are axially clamped between the stop face (22) and the clamping jig (23), **characterized in that**
the seal arrangement (30) comprises a decoupling ring and a first and a second annular sealing element (31), the first sealing element (31) resting on the end face, the second sealing element (31) resting on the stop face (22) and the decoupling ring being axially clamped between the first and second sealing element (31).

2. Pressure sensor as per Claim 1, where the pressure measuring cell exhibits a meter body (10) and a measuring membrane (11) made of a first material and where the decoupling ring exhibits a second material, whereby the mechanical and/or thermal properties of the first material are the same as those of the second material.

3. Pressure sensor as per Claim 2, where the first material and the second material are the same.

4. Pressure sensor as per one of the Claims 2 or 3, where the first material comprises a ceramic, particularly corundum, or a crystalline material.

5. Pressure sensor as per one of the previous Claims, where the first and/or the second sealing element (31, 32) comprise an inert material, particularly PTFE.

6. Pressure sensor as per one of the previous Claims, where the decoupling ring (33) is limited axially by two plane-parallel end faces.

7. Pressure sensor as per Claim 6, where the end faces exhibit annular projections and/or recesses (34).

8. Pressure sensor as per one of the previous Claims, where the clamping jig (123, 323) and/or the housing (220) comprises an axially elastic element (124, 224, 324).

9. Pressure sensor as per Claim 8, where the axial clamping pressure on the first and the second sealing element (31, 32) does not fluctuate more than 40%, and preferably not more than 20% and most preferably not more than 10%, of the maximum clamping pressure occurring over temperature cycles between -40°C and 150°C.

10. Pressure sensor as per Claim 8 or 9, where the axial clamping pressure on the first and second sealing element (31, 32) does not drop below 0.8 MPa, and preferably not below 0.9 MPa and most preferably not below 1 Mpa, over temperature cycles between -40°C and 150°C.

11. Pressure sensor as per one of the Claims 8 to 10, where the elastic element (123, 323) comprises a disk spring.

12. Pressure sensor as per one of the Claims 8 to 10, where the elastic element is designed as an axially flexible corrugated pipe membrane (224) which encompasses the media opening (221), where the corrugated pipe membrane exhibits the axial stop face (222) at a first axial end and is connected pressure-tight to the housing (20) at a process connection and a second end.

13. Pressure sensor as per one of the previous Claims, further comprising a compensation ring (15), which is axially clamped together with the pressure measuring cell (10), where the compensation ring (15) exhibits a larger thermal expansion coefficient than the material of the housing (20) and the pressure measuring cell (10) exhibits a smaller thermal expansion coefficient than the material of the housing (20).

14. Pressure sensor as per Claim 13 where the compensation ring (15) exhibits zinc, magnesium or aluminum.

## Revendications

1. Capteur de pression destiné à la mesure d'une pression de produit, comprenant :
une cellule de mesure de pression, dont une face frontale est alimentée avec le produit ;
un boîtier (20) avec une ouverture de produit (21) et une surface de butée (22) axiale annulaire, laquelle enveloppe l'ouverture de produit (21) ;
un dispositif de serrage (23) et
un dispositif d'étanchéité (30) annulaire, pour lequel
la cellule de mesure de pression est positionnée dans le boîtier (20) et le dispositif d'étanchéité (30) entre la surface de butée (22) et la face frontale, et le dispositif d'étanchéité (30) ainsi que la cellule de mesure de pression sont serrés axialement entre la surface de butée (22) et le dispositif de serrage (23), **caractérisé en ce que**
le dispositif d'étanchéité (30) comprend une bague de découplage ainsi qu'un premier et un deuxième élément d'étanchéité (31, 32), le premier élément d'étanchéité (31) reposant contre la face frontale, le deuxième élément d'étanchéité (32) reposant contre la surface de butée (22) et la bague de découplage étant serrée axialement entre le premier et le deuxième élément d'étanchéité (31, 32).

2. Capteur de pression selon la revendication 1, pour lequel la cellule de mesure de pression présente un corps de base (10) et une membrane de mesure (11) en un premier matériau et la bague de découplage est composée d'un deuxième matériau, les propriétés mécaniques et/ou thermiques du premier matériau étant équivalentes à celles du deuxième matériau.

3. Capteur de pression selon la revendication 2, pour lequel le premier matériau et le deuxième matériau sont identiques.

4. Capteur de pression selon l'une des revendications 2 ou 3, pour lequel le premier matériau est une céramique, notamment du corindon, ou un matériau cristallin.

5. Capteur de pression selon l'une des revendications précédentes, pour lequel le premier et/ou le deuxième élément d'étanchéité (31, 32) sont composés d'un matériau inerte, notamment du PTFE.

6. Capteur de pression selon l'une des revendications précédentes, pour lequel la bague de découplage (33) est limitée en direction axiale par deux faces frontales planes et parallèles.

7. Capteur de pression selon la revendication 6, pour lequel les faces frontales présentent des saillies et/ou des évidements (34) annulaires.

8. Capteur de pression selon l'une des revendications précédentes, pour lequel le dispositif de serrage (123, 323) et/ou le boîtier (220) comprend un élément élastique (124, 224, 324).

9. Capteur de pression selon la revendication 8, pour lequel la pression de serrage axiale exercée sur le premier et le deuxième élément d'étanchéité (31, 32) ne varie, sur des cycles de températures compris entre -40 °C et 150 °C, que d'un maximum de 40 %, de préférence que d'un maximum de 20 % et particulièrement de préférence que d'un maximum de 10 % de la pression de serrage maximale présente.

10. Capteur de pression selon la revendication 8 ou 9, pour lequel la pression de serrage axiale exercée sur le premier et le deuxième élément d'étanchéité (31, 32) ne parvient pas, sur des cycles de températures compris entre -40 °C et 150 °C, sous un minimum de 0,8 Mpa, de préférence sous un minimum de 0,9 Mpa et particulièrement de préférence sous un minimum de 1 Mpa.

11. Capteur de pression selon l'une des revendications 8 à 10, pour lequel l'élément élastique (123, 323) comprend une rondelle-ressort.

12. Capteur de pression selon l'une des revendications 8 à 10, pour lequel l'élément élastique est conçu en tant que membrane en tube ondulé (224) flexible axiale, laquelle enveloppe l'ouverture de produit (221), la membrane en tube ondulé présentant en une première extrémité axiale la surface de butée axiale (222) et étant reliée de façon étanche à la pression avec le boîtier (20) au niveau d'un raccord process et d'une deuxième extrémité.

13. Capteur de pression selon l'une des revendications précédentes, comprenant en plus une bague de compensation (15), laquelle est serrée axialement, conjointement avec la cellule de mesure de pression (10), la bague de compensation (15) présentant un coefficient de dilatation thermique supérieur à celui du matériau du boîtier (20), et la cellule de mesure de pression présentant un coefficient de dilatation thermique inférieur à celui du matériau du boîtier (20).

14. Capteur de pression selon la revendication 13, pour lequel la bague de compensation (15) est en zinc, en magnésium ou en aluminium.
